# EUROPÄISCHE PATENTSCHRIFT

(11) **EP 0 852 092 B1**
(45) Veröffentlichungstag und Bekanntmachung des Hinweises auf die Patenterteilung: **12.11.2003**
(21) Anmeldenummer: 96934408.4
(22) Anmeldetag: 03.09.1996
(51) Int. Cl.: H04M 3/38, H04M 1/66, H04Q 7/38, H04L 9/32

(54) **VERFAHREN FÜR EIN SICHERES INTERFACE ZWISCHEN TELEFON MIT KARTE UND DEM NETZ IN EINEM FERNSPRECHSYSTEM**
PROCESS FOR ENSURING A SECURING INTERFACE BETWEEN A TELEPHONE WITH A CARD AND THE NETWORK IN A TELEPHONE SYSTEM
PROCEDE POUR GARANTIR UNE INTERFACE SURE ENTRE UN TELEPHONE A CARTE ET LE RESEAU DANS UN RESEAU TELEPHONIQUE

(30) Priorität: 21.09.1995 DE 19535128
(43) Veröffentlichungstag der Anmeldung: 08.07.1998
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: DE9601634
(87) Internationale Veröffentlichungsnummer: WO97011548

(56) Entgegenhaltungen:
- EP-A- 0 502 446
- EP-A- 0 635 964
- DE-A- 4 406 602
- GB-A- 2 211 050
- INTERNATIONAL COMPUTER SYMPOSIUM CONFERENCE PROCEEDINGS, Bd. 1, 12.Dezember 1994, Seiten 297-302, XP000577607 DURAIAPPAN C ET AL: "ENHANCING SECURITY IN GSM"

## Beschreibung

Die Erfindung bezieht sich auf ein Verfahren für ein sicheres Interface zwischen Telefon mit Karte mit Teilnehmeridentität und Netz bei der Wahl bestimmter, vorprogrammierter Telefonnummern in einem Fernsprechsystem. Damit soll dem Benutzer eines Telefons nur gestattet werden, bestimmte, vorprogrammierte Telefonnummern anzuwählen.

Aus der Druckschrift GB-A-2 211 050 ist bereits ein Verfahren für ein sicheres Interface zwischen Telefon mit Karte und Teilnehmeridentität und Netz gemäß dem Oberbegriff des Anspruch 1 bekannt.

Beim Mobilfunksystem GSM (Group Special Mobile) ist dieses Merkmal mit FDN (Fixed Dialing Number) bezeichnet. Auf einer Chipkarte werden die erlaubten Nummern und die Tatsache, ob die Beschränkung ein- oder äusgeschaltet ist, gespeichert. Falls das Merkmal "Beschränkung" eingeschaltet ist, prüft das Telefon bei Eingabe einer Nummer, ob diese freigegeben ist und führt bei positivem Ergebnis einen Verbindungsaufbau durch. Hierbei besteht jedoch das Problem, daß die Schnittstelle zwischen Karte und Telefon frei zugänglich ist, man also sehr leicht das Vorhandensein einer beliebigen Nummer in der Liste der erlaubten Nummern vortäuschen kann, indem z.B. die relevanten Kommandos abgefangen werden.

In der Druckschrift "Enhancing Security in GSM", einem Konferenzbericht des International Computer Symposium Conference Proceedings, Bd. 1, 12.12.1994, sind Verbesserungen der Sicherheitseinrichtungen bei GSM beschrieben. Es ist ein authentifiziertes schlüsselverteilungsprotokoll beschrieben, welches zwischen einem Authentifizierungs-Center und einer mobilen Station wirkt, für jeden von der mobilen Station unternommenen Anrufversuch.

Der Erfindung liegt die Aufgabe zugrunde, ein einfaches Verfahren für ein sicheres Interface zwischen Telefon mit Karte und dem Netz für die Wahl nur vorprogrammierter Telefonnummern anzugeben.

Diese Aufgabe wird gemäß der Erfindung in der Weise gelöst, daß bei einem Zugriffs- bzw. Verbindungswunsch die gewählte Telefonnummer vom Telefon an die Karte übertragen wird, die eine mögliche Freigabe der Telefonnummer überprüft, und bei positivem Ergebnis der Überprüfung aus dieser Telefonnummer und einem sich ändernden vom Netz oder von einem Authentifizierungszentrum vorgegebenen Code mit einem geheimen Algorithmus eine Signatur erzeugt wird, anschließend. die Signatur zusammen mit der Telefonnummer an das Netz übertragen wird und von diesem durch Überprüfung der Signatur die Freigabe der gewählten Telefonnummer durch die Karte ermittelt wird.

Durch die erfindungsgemäße Ausgestaltung ist eine Manipulation im Telefon oder an der Schnittstelle zur Karte nicht möglich. Trotzdem braucht die Liste der erlaubten Nummern nicht im Netz verwaltet zu werden. Die zusätzlichen Aufwendungen zur Realisierung dieser Ausbildung sind gering, da die verwendeten Chipkarten üblicherweise bereits Authentifizierungsalgorithmen und Suchroutinen implementiert haben und auch auf Netzseite und Kartenseite parallele Algorithmen zur Authentifizierung eingesetzt werden. Falls kein Suchalgorithmus in der Karte implementiert werden soll, kann das Telefon auch der Karte die Platznummer der Telefonnummer mitteilen; die Karte muß dann nur noch einen Vergleich durchführen.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Dabei zeigt
- Figur 1: ein Plußdiagramm zur Absicherung von zugelassenen Telefonnummern,
- Figur 2: eine Ausführungsform mit einem auf Schnelligkeit abgestellten Nachrichtenfluß, und
- Figur 3: eine Ausführungsform, bei der ein beiden Seiten bekannter Schlüssel aus einer vorausgegangenen Authentifikation verwendet wird.

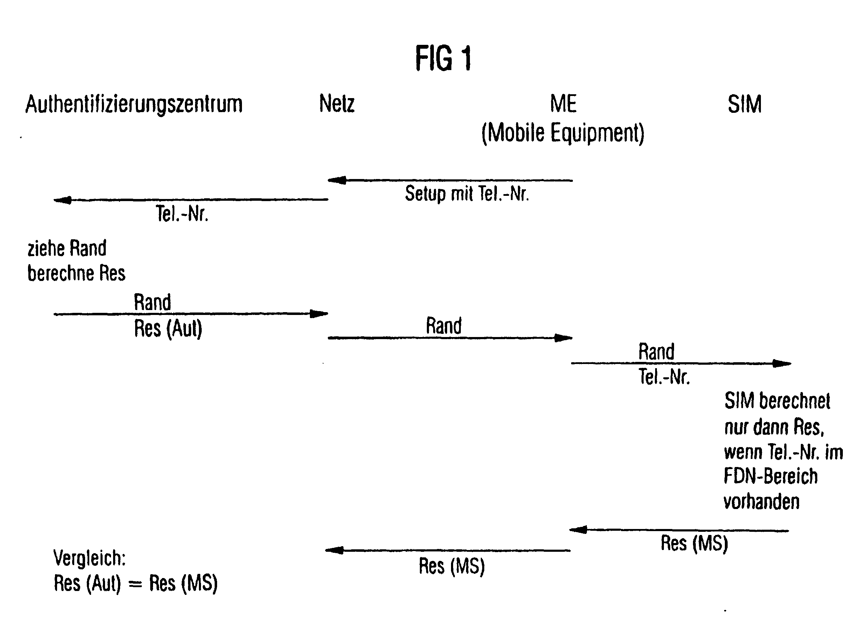

Fig. 1 zeigt in einem Flußdiagramm den Verfahrensablauf zur Absicherung von durch Vorprogrammierung zugelassenen Telefonnummern. Von der mobilen Einrichtung ME (Mobile Equipment) erfolgt das Setup mit der Telefonnummer zum Netz, von dem aus die Telefonnummer weitergegeben wird an das Authentifizierungszentrum Aut. In diesem wird eine Zufallszahl Rand gezogen, aus der zusammen mit der Telefonnummer ein Resultat Res berechnet wird. Rand und Res(Aut) werden an das Netz übertragen und von diesem wird die Zufallszahl Rand an die mobile Einrichtung weitergegeben. Von dieser aus erfolgt die Übertragung von Rand und der Telefonnummer an die Karte SIM (Subscriber Identity Modul). Die Karte berechnet nur dann ein Resultat Res, wenn die Telefonnummer im FDN-Bereich vorhanden ist. Bei positivem Ergebnis wird das Resultat Res(MS) an die mobile Einrichtung ME und von dieser an das Netz weitergegeben, wo ein Vergleich mit dem Resultat des Authentifizierungszentrums Res(Aut) erfolgt. Der Algorithmus berechnet dabei aus der Zufallszahl Rand und der Telefonnummer und evtl. aus einem zusätzlichen kartenabhängigen Code das Resultat Res, auch Antwort oder Signatur genannt. Algorithmus und Code sind nur der Karte und dem Authentifizierungscenter bekannt.

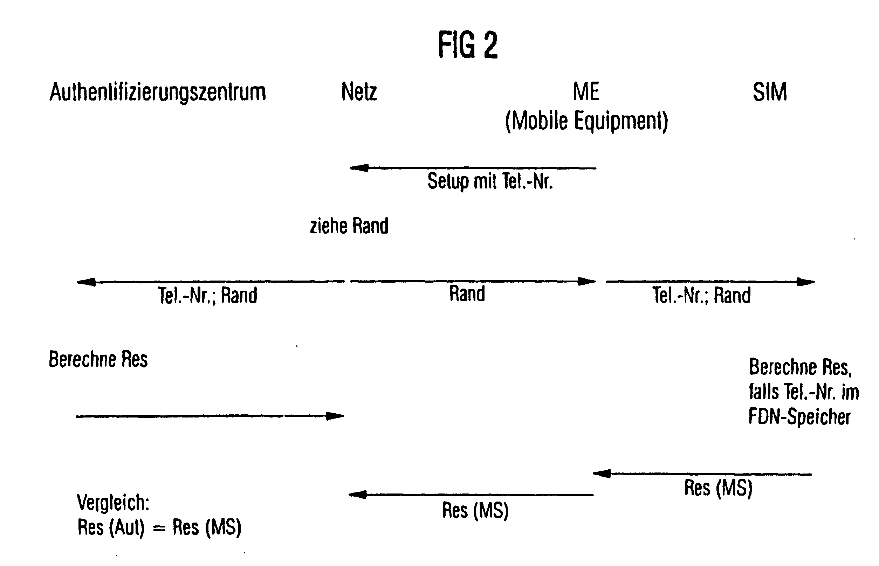

Fig. 2 zeigt eine Ausführungsform mit einem auf Schnelligkeit abgestellten Nachrichtenfluß. Hierbei erfolgt ebenfalls ein Setup mit Telefonnummer von der mobilen Einrichtung ME zum Netz, in diesem wird jedoch bereits eine Zufallszahl Rand gezogen und zusammen mit der Telefonnummer an das Authentifizierungszentrum übertragen. Die Zufallszahl Rand wird zugleich zur mobilen Einrichtung und von dieser zusammen mit der Telefonnummer zur Karte SIM übertragen. Hier erfolgt eine Berechnung eines Resultats Res, falls die Telefonnummer im FDN-Speicher enthalten ist. Bei positivem Ergebnis wird das Resultat Res(MS) der Karte über die mobile Einrichtung zum Netz übertragen und in diesem mit dem im Authentifizierungszentrum berechneten Resultat Res(Aut) verglichen.

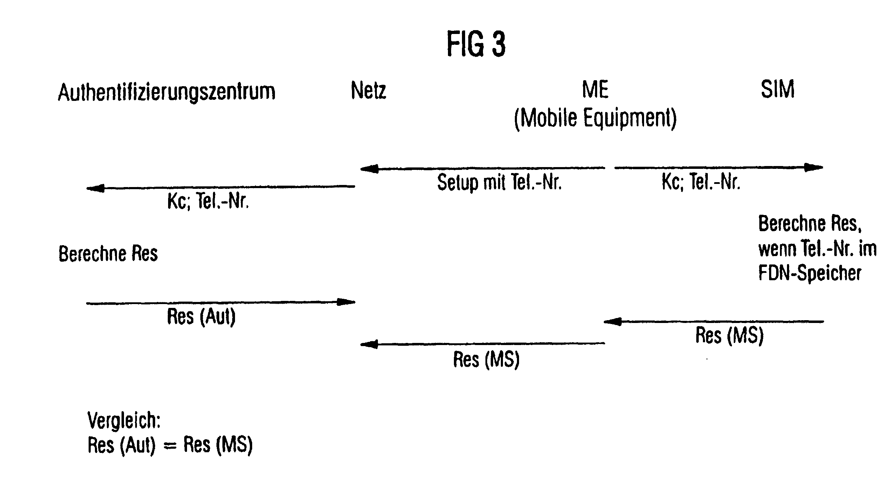

Fig. 3 zeigt eine Ausführungsform, bei der ein beiden Seiten, d.h. der Karte und dem Authentifizierungscenter bekannter Schlüssel z.B. Kc aus einer vorausgegangenen Authentifikation verwendet wird anstelle einer Zufallszahl Rand. Von der mobilen Einrichtung ME aus erfolgt zum einen ein Setup mit der Telefonnummer zum Netz, von dem aus der Schlüssel und die Telefonnummer zum Authentifizierungszentrum übertragen werden, und zum anderen eine Übertragung von Schlüssel und Telefonnummer zur Karte SIM. Im Authentifizierungszentrum wird ein Resultat Res berechnet, ebenfalls in der Karte ein Resultat Res, wenn die Telefonnummer im FDN-Speicher enthalten ist. Beide Resultate, nämlich Res (Aut) und Res(MS) werden dann im Netz miteinander verglichen.

## Patentansprüche

1. Verfahren für ein sicheres Interface zwischen Telefon (ME) mit Karte (SIM) mit Teilnehmeridentität und Netz wobei bestimmte, vorprogrammierte Telefonnummern auf der Karte (SIM) gespeichert sind, und bei einem Zugriffs- bzw. Verbindungswunsch die gewählte Telefonnummer (Tel.-Nr.) vom Telefon (ME) an die Karte (SIM) übertragen wird, die eine mögliche Freigabe der Telefonnummer (Tel.-Nr.) überprüft, **dadurch gekennzeichnet, daß**
a) bei positivem Ergebnis der Überprüfung aus dieser Telefonnummer (Tel.-Nr.) und einem sich ändernden vom Netz oder von einem Authentifizierungszentrum vorgegebenen Code (Rand) mit einem geheimen Algorithmus eine Signatur (Res(MS)) erzeugt wird und
b) die Signatur (Res(MS)) zusammen mit der Telefonnummer (Tel.-Nr.) an das Netz übertragen wird und
c) von diesem durch Überprüfung der Signatur (Res(MS)) die Freigabe der gewählten Telefonnummer durch die Karte ermittelt wird.

2. Verfahren nach Anspruch 1, **dadurch gekennzeichnet, daß** bei einem Zugriffs- bzw. Verbindungswunsch von der Teilnehmereinrichtung ein Setup mit der Telefonnummer (Tel.-Nr.) vorgenommen wird, im Netz eine Zufallszahl (Rand) gezogen und beides zum Authentifizierungszentrum übertragen wird, in dem ein Resultat (Res) berechnet wird, und daß die vom Netz gezogene Zufallszahl (Rand) zugleich zur Teilnehmereinrichtung und zusammen mit der Telefonnummer zur Karte (SIM) übertragen wird, in der ein Resultat (Res (MS)) berechnet wird, falls es sich um eine bestimmte, vorprogrammierte Telefonnummer handelt, und daß anschließend das Resultat der Karte (Res(MS)) mit dem Resultat des Authentifizierungszentrums (Res(Aut)) im Netz verglichen wird.

3. Verfahren nach Anspruch 1 oder 2, **dadurch gekennzeichnet, daß**
a) bei Kenntnis eines Schlüssels (Kc) aus einer vorausgegangenen Authentifikation auf Seiten der Karte und eines Authentifizierungszentrums dieser Schlüssel anstelle einer Zufallszahl zur Berechnung des Resultats (Res(MS)) verwendet wird und
b) die Telefonnummer von der Teilnehmereinrichtung zum Netz und von diesem zusammen mit dem Schlüssel zum Authentifizierungszentrum übertragen wird, in dem ein Resultat Res(Aut) berechnet wird, das mit dem Resultat Res(MS) der Karte verglichen wird.

4. Verfahren nach einem der Ansprüche 1 bis 3, **dadurch gekennzeichnet, daß** zusammen mit der gewählten Telefonnummer auch die Platznummer dieser Telefonnummer an die Karte (SIM) übertragen wird zusammen mit der Zufallszahl (Rand) bzw. dem zuvor ausgetauschten Schlüssel (Kc) und die Karte (SIM) nur dann das Resultat (Res) berechnet, wenn die übertragene Telefonnummer an der ebenfalls übertragenen Platznummer freigegeben ist.

## Claims

1. Method for a reliable interface between a telephone (ME) having a card (SIM) with subscriber identity and the network, specific preprogrammed telephone numbers being stored on the card (SIM) and, when there is a desire for access or connection, the dialled telephone number (Tel. No.) is transmitted from the telephone (ME) to the card (SIM), which checks a possible enabling of the telephone number (Tel. No.),
**characterized in that**,
a)in the event of a positive result of the check, a secret algorithm is used to produce a signature (Res(MS)) from this telephone number (Tel. No.) and a varying code (Rand) which is predetermined by the network or by an authentication centre, and
b)the signature (Res(MS)) is transmitted together with the telephone number (Tel. No.) to the network, and
c)the enabling of the dialled telephone number by the card is determined by said network by checking the signature (Res (MS)).

2. Method according to Claim 1, **characterized in that** when there is a desire for access or connection, a setup with the telephone number (Tel. No.) is performed by the subscriber equipment, a random number (Rand) is drawn in the network and both are transmitted to the authentication centre, in which a result (Res) is calculated, and **in that** the random number (Rand) drawn by the network is simultaneously transmitted to the subscriber equipment and is transmitted, together with the telephone number, to the card (SIM), in which a result (Res (MS)) is calculated if the telephone number is a specific preprogrammed telephone number, and **in that** the result of the card (Res(MS)) is subsequently compared with the result of the authentication centre (Res(Aut)) in the network.

3. Method according to Claim 1 or 2, **characterized in that**
a)if a key (Kc) from a preceding authentication is known to the card and to an authentication centre, this key is used instead of a random number to calculate the result (Res(MS)) and
b)the telephone number is contained in the FDN memory, and the telephone number is transmitted from the subscriber equipment to the network and, from the latter, is transmitted together with the key to the authentication centre, in which a result Res(Aut) is calculated and is compared with the result Res (MS) of the card.

4. Method according to one of Claims 1 to 3, **characterized in that**, together with the dialled telephone number, the location number of this telephone number is also transmitted to the card (SIM) together with the random number (Rand) or the previously exchanged key (Kc), and the card (SIM) calculates the result (Res) only when the transmitted telephone number at the likewise transmitted location number is enabled.

## Revendications

1. Procédé pour garantir une interface sûre entre un téléphone (ME) avec une carte (SIM) contenant l'identité de l'abonné et le réseau, sur ladite carte (SIM) étant stockés des numéros de téléphone déterminés et préprogrammés et lors d'une demande d'accès ou de connexion, le numéro de téléphone (Tel.-Nr.) sélectionné étant transmis par le téléphone (ME) à la carte (SIM) qui vérifie une possible validation du numéro de téléphone (Tel.-Nr.), **caractérisé en ce que**
a) en cas de résultat positif de la vérification, il est généré à partir de ce numéro de téléphone (Tel.-Nr.) et d'un code (Rand) variable prédéfini par le réseau ou un centre d'authentification, à l'aide d'un algorithme secret, une signature (Res(MS)) et
b) la signature (Res(MS)) est transmise ensemble avec le numéro de téléphone (Tel.-Nr.) au réseau et
c) celui-ci détermine par vérification de la signature (Res(MS)) la validation du numéro de téléphone sélectionné par la carte.

2. Procédé selon la revendication 1, **caractérisé en ce que** lors d'une demande d'accès ou de connexion, il est procédé par le poste d'abonné à un setup avec le numéro de téléphone (Tel.-Nr.), **en ce qu'**un nombre aléatoire (Rand) est tiré dans le réseau et les deux sont transmis au centre d'authentification dans lequel un résultat (Res) est calculé, et **en ce que** le nombre aléatoire (Rand) tiré par le réseau est transmis en même temps au poste d'abonné et ensemble avec le numéro de téléphone à la carte (SIM) dans laquelle un résultat (Res(MS)) est calculé s'il s'agit d'un numéro de téléphone déterminé et préprogrammé, et **en ce que** le résultat de la carte (Res(MS)) est ensuite comparé avec le résultat du centre d'authentification (Res(Aut)) dans le réseau.

3. Procédé selon la revendication 1 ou 2; **caractérisé en ce que**
a) en cas de connaissance d'une clé (Kc) par une authentification précédente du côté de la carte et d'un centre d'authentification, cette clé est utilisée à la place d'un nombre aléatoire pour calculer le résultat (Res(MS)) et
b) le numéro de téléphone est transmis du poste d'abonné au réseau et de celui-ci ensemble avec la clé au centre d'authentification dans lequel un résultat Res(Aut) est calculé, qui est comparé avec le résultat Res(MS) de la carte.

4. Procédé selon l'une des revendications 1 à 3, **caractérisé en ce qu'**ensemble avec le numéro de téléphone sélectionné, également le numéro de position de ce numéro de téléphone est transmis à la carte (SIM) ensemble avec le nombre aléatoire (Rand) resp. la clé (Kc) préalablement échangée, et **en ce que** la carte (SIM) ne calcule le résultat (Res) que si le numéro de téléphone transmis est validé au niveau du numéro de position également transmis.
